Europäisches Patentamt

(19) European Patent Office

Office européen des brevets

(11) Publication number: **0 152 734**
**B1**

(12) **EUROPEAN PATENT SPECIFICATION**

(45) Date of publication of patent specification: **11.04.90**

(51) Int. Cl.⁵: **H 05 B 3/46, B 23 K 3/04**

(21) Application number: **85100039.8**

(22) Date of filing: **02.01.85**

(54) **Small diameter radiant tube heater.**

(30) Priority: **16.01.84 US 571214**
**16.01.84 US 571215**

(43) Date of publication of application:
**28.08.85 Bulletin 85/35**

(45) Publication of the grant of the patent:
**11.04.90 Bulletin 90/15**

(84) Designated Contracting States:
**BE CH DE FR GB IT LI SE**

(56) References cited:
**EP-A-0 080 576     GB-A- 327 241**
**EP-A-0 096 772     US-A-1 147 388**
**CH-A- 119 830     US-A-1 384 067**
**DE-A-2 059 466     US-A-1 642 223**
**GB-A- 313 691**

**Römpps Chemie-Lexicon, 7th edition, pages
2730-2731**

**Römpps Chemie-Lexicon, 8th edition, page 496**

(73) Proprietor: **WESTINGHOUSE ELECTRIC
CORPORATION
Westinghouse Building Gateway Center
Pittsburgh Pennsylvania 15222 (US)**

(72) Inventor: **Driggers, John Martin
833 Norvell Drive
Pittsburgh Pennsylvania 15235 (US)**
Inventor: **Thomas, John Saska
107 Wayne Street Lower Burrell
Pennsylvania 15068 (US)**
Inventor: **Kitzes, Arnold Stanley
2740 Mt. Royal Road
Pittsburgh Pennsylvania 15217 (US)**

(74) Representative: **Patentanwälte Dipl.-Ing. R.
Holzer Dipl.-Ing. (FH) W. Gallo
Ludwigstrasse 26
D-8900 Augsburg (DE)**

Courier Press, Leamington Spa, England.

## Description

Background of the invention

This invention generally relates to radiant tube-heaters, and more particularly to a special purpose tube-heater which has application for heating the inside of tubes of a steam generator.

There is a need for a small diameter, highly portable heat source, for the internal heating of tubes and tube-sleeve asemblies, in heat exchangers, particularly in steam generators.

The need is particularly difficult to fill where the tubes are small in diameter, that is, for example, having a diameter as small as about 0.75 cm. In addition to the small bore size, often such tubes are installed in locations where access is difficult to obtain.

Conventional approaches for the above purpose are not satisfactory. Induction heating e.g. as known from EP—A1—0096772 or EP—A1—0080576, has been used on certain tubing, but the coils required for induction heating cannot be formed to the proper size, that is, sufficiently small, for some applications. A quartz lamp has been used as a radiant heat source on larger diameter tubes, but is also either is not available or cannot be made in sufficiently small diameters.

Electrical resistance heating offers one possible solution, but since the ordinary electrical resistance heating element requires a power supply and cables, once again access and size present problems. These problems are magnified because in some cases the desired temperature which is expected to be produced by the heaters may be as high as 1500°C or even higher. Moreover, the heat application often must be highly concentrated, that is confined to a zone about 2,5 cm long along the length of the tube. Often, heat generation must be very rapid, e.g., less than 5 minutes to attain 1000°C to 1100°C or higher.

The following prior art documents may be of interest: U.S. Patent US—A—642,223; Swiss Patent CH—A—119,830; U.S. Patent US—A—1,384,067; G.B. Patent GB—A—327,241 and European Patent Applications EP—A1—0080576 and EP—A1—0096772. U.S. Patent 1,642,223 teaches a heater assembly enclosed in a shell filled with insulating material and is not suitable for use as a radiant exposed heater for brazing sleeves inside tubes.

The Swiss Patent CH—A—119,830, describes a heating unit according to the preamble of Claim 1 but it is still not suitable for purposes of the present invention because of the materials of the mandrel and heating coil and the design.

U.S. Patent US—A—1,384,067 teaches a weatherproof heater for use under water or in snow, and is not physically or structurally suitable.

G.B. Patent GB—A—327,241 also teaches an encased non-radiant heater, and neither structurally nor functionally is suitable for purposes of the present invention.

Published European Patent Applications EP—A1—008,0576 and EP—A1—009,6772 teach what could be viewed as more expensive versions and predecessors of the present invention.

Even though both these published texts of European patent applications are concerned with apparatus for brazing of sleeves inside steam generator tubes, functionally the present invention is found to perform with superior results.

Summary of the invention

The invention comprises a radiant electrical heating unit as defined in Claim 1.

An embodiment described herein provides an electrical resistance heating unit that is capable of being manufactured for easy insertion in the bore of a very small diameter tube. It may also be highly portable, but is capable of attaining high temperature rapidly to heat a surrounding tube in a very localized area.

A heating unit constructed in accordance with the invention is formed with an elongate, refractory, generally cylindrical electrically insulating mandrel. The mandrel is formed with a lengthwise-extending bore, and with enlarged diameter shoulders at each of its ends. The electrical resistance element, preferably a platinum-rhodium alloy wire, is wound in the form of a helical coil on the mandrel between the two shoulders, in groups of windings. These groups of windings are spaced from each other lengthwise of the mandrel.

Each shoulder of the mandrel and the body of the mandrel are formed with an axially-extending bore therethrough. At each end of the heating coil, the wire is extended through the bore on the adjacent shoulder. One of these wires is then led back through the axially-extending bore of the mandrel, so that both wires are available at the same end of the unit for connection to leads connected to a supply voltage.

Both the shape of the mandrel, and the way in which the conductive heating element is wound on the recessed central portion of the mandrel serve to keep the live segments of the heating element from making contact with each other and thus shorting out, and also prevent contact between the wall of a tube in which the unit is inserted and the heating element.

Heating elements made with platinum-rhodium alloy wire coils can be designed to operate at elevated temperatures, in the range, for example, of from 1000°C to 1700°C or even higher. Such units can be designed to be durable, easy to handle, and easy to operate. They can be used to generate heat for brazing, stress relieving and other applications, in tubes having diameters as small as 0.75 cm, or even smaller if required.

Brief description of the drawings

The invention can be understood in greater detail from the following description of a preferred embodiment, given by way of example and to be read and understood in condjunction with the accompanying drawings, wherein:

Figure 1 is a part side elevation, part section, of a mandrel for use as a part of an electrical resistance heating unit constructed in accordance with one preferred embodiment of the invention;

Figure 2 is a part side elevation, part section, partly broken away, of an electrical resistance heating unit constructed in accordance with one preferred embodiment of the invention, showing the leads of the unit fastened to and in electrical contact with crimped connectors, that may be connected to a power source; and

Figure 3 is a fragmentary section on a reduced scale of a tube-sleeve assembly having a heating unit such as that shown in Fig. 2 inserted in the bore of the assembly, for brazing the sleeve to the tube.

Detailed description of the preferred embodiment

Referring to the drawings, the mandrel 10 has a generally cylindrical body that is formed with a center section 12 and with a pair of enlarged diameter shoulders 14, 16 at each of its ends. The mandrel 10 is formed with an axially-extending bore 18 that extends completely lengthwise of the mandrel and that is open at both ends.

The outer surface of the center section 12 of the mandrel is provided with helical grooves or recesses 20 over substantially its entire length, for a purpose to be described presently. One shoulder 14 is formed with a lengthwise-extending bore that extends throughout the shoulder and that is open at both of its ends. Similarly, the other shoulder 16 is formed with a lengthwise-extending bore 24 that extends completely through its length and that is open at both of its ends. Preferably, the bore 22 in the shoulder 14 is angularly spaced 180° from the bore 24 in the shoulder 16.

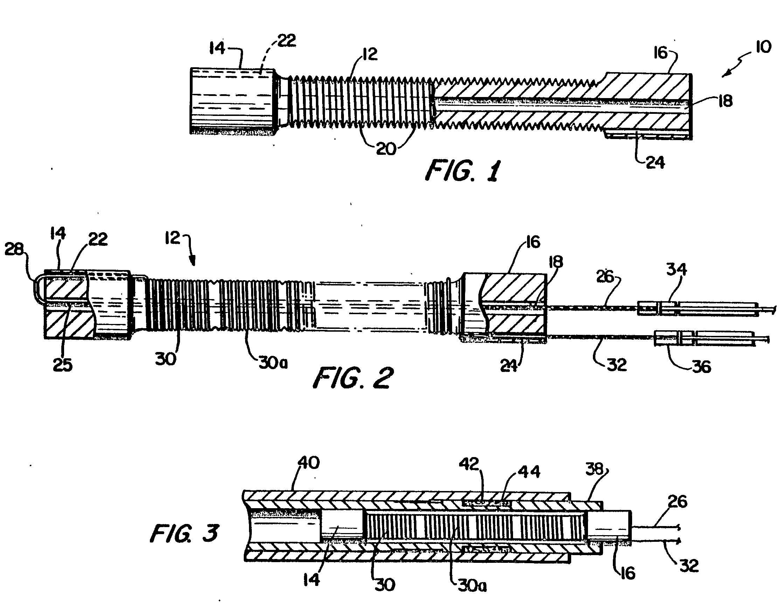

Referring now to the heating unit assembly shown in Fig. 2, the section 25 of the electrical resistance heating wire that passes through the axial bore 18 of the mandrel extends out of the bore and away from the mandrel, to provide a lead member 26 that projects from the end of the mandrel. The wire section 25 and the lead member 26 are twisted or braided for strength and for thermal characteristics. The braiding may be accomplished by bending the wire back upon itself, or using a second length of wire long enough to permit the braiding.

Since braiding provides two parallel paths for conducting electricity, a braided length of wire generates less electrical resistance heating than does a single wire conductor. Use of the braided structure for wire that is disposed within the axial bore 18 of the mandrel is therefore preferred in order to reduce electrical resistance heating there and thereby prevent or reduce deterioration of the mandrel. Use of the braided structure is desirable to permit operation of the device at high temperatures.

At the point where the wire section 25 projects from the other end of the mandrel bore 18, the braiding is no longer needed and may stop. The wire then is bent back on itself in a generally U-shaped section 28, and is inserted through the bore 22 in the shoulder 14. It is then wound around the center section 12 of the mandrel, with the individual windings of the wire seated in the helical recesses 20.

The coil of wire that is thus mounted on the center section 12 of the mandrel 10 is wound in groups 30, 30A, etc., of windings. These groups of windings are spaced from each other respectively along the length of the mandrel center section 12, to reduce the heating intensity developed during operation of the unit.

Adjacent the shoulder 16, the electrical resistance wire is led through the bore 24, to project out of the same end of the mandrel as the other lead member 26. To facilitate fabrication, the length of the wire that is inside the bore 24 in the shoulder 16 is not braided. The projecting end of the electrical resistance heating wire provides a second lead member 32, which is braided. Both lead members 26 and 32 are connected through standard copper crimp connectors 34 and 36, respectively, to standard copper wire conductors that may be connected to a source of electrical power.

The electrical resistance heating wire is preferably formed from a platinum based alloy wire. The preferred alloy is a platinum-rhodium alloy, many of which alloys are commercially available. The rhodium content may be from about 1% up to about 20%, preferably from about 2% to 15%. The alloy containing 10% rhodium and 90% platinum is particularly preferred. Alloys of platinum with ruthenium also could be used, as could alloys containing very small amounts of iridium and osmium. Generally, the alloy selected for use should have a very high melting point, be workable to the extent needed for present purposes, resist oxidation at high temperatures, and have the appropriate electrical resistivity for the essential heating function.

The mandrel preferably is made from boron nitride. This material has excellent thermal, electrical and machining properties for present purposes. Other materials that appear to be satisfactory include zirconium oxide and aluminum oxide, which have even better thermal properties than boron nitride.

When the electrical resistance heating element is formed from a 90% platinum—10% rhodium alloy, the heating unit of the invention can be operated at temperatures as high as 1750°C. Even at this high temperature, the unit is highly resistant to oxidation even when operating in air. This permits use of the unit in the open atmosphere rather than in a protective atmosphere of inert gas.

When the unit is connected to a power supply that will apply a voltage of from 40 to 200 volts, temperatures in the range from about 1400°C to about 1650°C are easily achieved. When the power source is conventional, i.e., 120 volts at 60 Hz, the temperature developed will depend upon wire size and coil dimensions. However, generally, the desired temperature can be achieved very rapidly, often in less than about 3 minutes. With the unit shown in Fig. 2 of the drawings, the rate of temperature increase after connection of the unit to a power source may be equal to or greater than 14°C per second.

To use the heating unit for brazing, as shown in Fig. 3, a sleeve 38 is inserted into the bore of a tube 40. The fit preferably is a snug, sliding fit. One of the two, most conveniently the sleeve 38, is formed with an annular recess 42, within which a ring of brazing material 44 is disposed. The heating unit is then inserted within the bore of the sleeve and is preferably positioned so that the mid-point of the unit is located at approximately the mid-point of the ring of brazing material 44. The unit is then connected to a standard source of 60 cycle, 120 volt electricity.

The heating unit in one such case had a center section about 5.7 cm long. The overall length of the unit was about 8.1 cm. The radius of the center section 12 of the mandrel was about 0.3 cm less than the radius of each of the shoulders of the mandrel. The electrical resistance heating wire was made from a platinum alloy containing 90% platinum and 10% rhodium, and had a diameter of 0.50 cm. The wire was wound in the recesses 20 of the center section 12 of the mandrel at 32 turns for each 2.54 cm. The spacing between adjacent turns was about 0.0254 cm. Every approximately 1.3 cm, one of the recesses 20 was left open, that is, empty, so that there were groups 30, 30A, etc., of windings on the mandrel, separated by spaces devoid of windings.

In this case, the sleeve 38 had an internal diameter of about 0.838 cm, and an outside diameter of 0.991 cm. The tube 40 had an internal diameter of 1.02 cm, and an outside diameter of 1.22 cm.

When the heating unit was connected to the source of electrical potential, at a voltage input of 38 volts and a current of 10.5 amps, using 60 cycle AC, the temperature of the coil increased at a rate of at least 14°C per second. A brazing temperature of about 1100°C was achieved quickly across the full thickness of the assembly. The heating wire itself achieved a temperature in the neighborhood of 1600°C. A good braze was obtained after heating the assembly for about 60 seconds at about 1100°C. The braze was free from voids when examined. Referring to this same heating unit, higher temperatures and higher heating rates could be obtainable, since the heating wire itself can operate at temperatures approaching 1800°C.

An advantageous feature of heating units constructed in accordance with the present invention is the ability to generate high temperatures at very high heating rates, when inserted in small diameter tubes and assemblies. Since both electrical leads emerge from the same end of the heating unit, insertion in small diameter bores is facilitated. The use of braided lead members and crimped connections are features that facilitate bringing both lead members from the same end of the unit. A shaft or flexible rod could be secured to the mandrel to facilitate handling it and its insertion in a tube.

The construction illustrated in Fig. 2, with one braided lead inserted through the central bore 18 of the mandrel, is designed for resistance to thermal degradation of the unit. The use of a braided lead decreases the amount of resistance heating that takes place in this part of the unit and also provides a heat sink effect. The reduced heat generation that occurs because of the use of twisted or braided leads also permits the use of a crimped connection between the platinum alloy electrical resistance heating wire and ordinary copper wires that preferably are used to interconnect the crimped connectors and the power source.

The spacing between the groups of wound wires 30, 30A, etc., on the center section 12 of the mandrel, is to minimize any excessive heating that might occur were the winding to be continuous over the entire length of the center section of the mandrel. The spacing between the groups of windings permits the unit to be constructed with an active heating zone of greater axial extent than would otherwise be the case. Because of such spacing, units having electrical resistance heating windings extending over mandrel lengths of 5 cm and more can be achieved. The spacing between the adjacent windings within each group of windings not only prevents shorting but also permits high power density in the element.

The construction shown permits the use of bare wires, free from electrical insulation. However, a glass, quartz, sapphire, aluminum oxide such as Lucalux material, and other refractory electrical insulating material sleeve could be disposed about the mandrel, covering the windings, if added protection is desired.

A heating unit constructed with a boron nitride mandrel usually has good resistance to thermal degradation. After 15—20 cycles of use at peak temperatures of 1500°C or more, some oxidation and vaporization of the boron nitride may occur, particularly near the mid-point of the mandrel. However, useful life remins and such a unit may be useful for many more cylces.

**Claims**

1. A radiant electrical heating unit comprising;
an elongate generally cylindrical mandrel (10) made of insulating refractory material and having a longitudinally extending central bore (18) and enlarged diameter shoulders (14, 16) at its both ends, and
an electrical resistance heating wire coil (30, 30A) helically wound onto said mandrel intermediate said shoulders and terminating at its both ends in lead wire sections (25, 26, 32) each extending through an axial aperture (22, 24) formed in the adjacent shoulder, one (25, 26) of said lead wire portions extending also through said central bore (18), characterised in that
said mandrel (10) is made of boron nitride,
said heating wire coil (30, 30A) is made of a platinum based alloy,

said lead wire portion (25, 26) extending through said central bore (18) is formed at least in part as a multiple braided conductor to reduce resistance to minimize heat produced in said bore, and

said mandrel (10) is formed with helical recesses (20) in its outer surface intermediate said shoulders to receive the windings of said coil (30, 30A) and to insulate them from each other by interposed parts of the mandrel.

2. The heating unit of claim 1, characterised in that said coil is formed with groups (30, 30A) of windings which are spaced from each other lengthwise of the mandrel (10).

3. The heating unit of claim 1 or 2, characterised in that said heating wire coil is made of a platinum-rhodium alloy.

**Patentansprüche**

1. Elektrischer Heizstrahler mit:

einer länglichen, etwa zylindrischen Spindel (10) aus isolierendem feuerfestem Material, die eine mittige Längsbohrung (18) und an beiden Enden Schultern (14, 16) vergrößerten Durchmessers aufweist, und

einer elektrischen Widerstandsheizdrahtspule (30, 30A), die zwischen den Schultern schraubenlinienförmig auf die Spindel aufgewickelt ist und beiden Enden in Anschlußdrahtabschnitten (25, 26, 32) endigt, die jeweils durch eine axiale Öffnung (22, 24), in der angrenzenden Schulter hindurchverlaufen, wobei eine (25, 26) der beiden Anschlußdrahtabschnitte außerdem durch die mittige Bohrung (18) hindurchverläuft, dadurch gekennzeichnet, daß

die Spindel (10) aus Bornitrid gefertigt ist, die Heizdrahtspule (30, 30A) aus einer Platinbasislegierung hergestellt ist,

der durch die mittige Bohrung (18) hindurchverlaufende Anschlußdrahtabschnitt (25, 26) mindestens teilweise aus einem Mehrfachlitzenleiter besteht, um zur Minimierung der in der Bohrung erzeugten Wärme den Widerstand zu verringern, und die Spindel (10) mit in ihrer Außenfläche zwischen den Schultern gebildeten schraubenlinienförmigen Vertiefungen (20) zur Aufnahme der Windungen der Spule (30, 30A) und zu deren gegenseitiger Isolierung durch dazwischenliegende Spindelbereiche ausgebildet ist.

2. Heizstrahler nach Anspruch 1, dadurch gekennzeichnet, daß die Spule mit Gruppen (30, 30A) von Windungen ausgebildet ist, die entlang der Spindel (10) mit Abstand angeordnet sind.

3. Heizstrahler nach Anspruch 1 oder 2, dadurch gekennzeichnet, daß die Heizdrahtspule aus einer Platin-Rhodium-Legierung hergestellt ist.

**Revendications**

1. Bloc de chauffage électrique rayonnant, caractérisé en ce qu'il comprend:

un mandrin cylindrique généralement allongé (10) réalisé dans un matériau réfractaire isolant et comportant un alésage central percé longitudinalement (18), ainsi qu'un épaulement de diamètre agrandi (14, 16) à ses deux extrémités, et

une bobine de fil de chauffage à résistance électrique (30, 30A) enroulée en hélice sur le mandrin dans une position intermédiaire entre les épaulement et se terminant à ses deux extrémités par des parties de fil conducteur (25, 26, 32) traversant chacune une ouverture axiale (22, 24) formée dans l'épaulement adjacent, l'une (25, 26) de ces parties de fil conducteur passant également dans l'alésage central (18),

un bloc de chauffage caractérisé en ce que le mandrin (10) est réalisé en nitrure de bore,

en ce que la bobine de fil de chauffage (30, 30A) est réalisée dans un alliage à base de platine,

en ce que la partie de fil conducteur (25, 26) passant dans l'alésage central (18) est réalisée, en partie au moins, sous la forme d'une conducteur à fils multiples tressés pour réduire la résistance de manière à minimiser la chaleur produite duns l'alésage,

et en ce que le mandrin (10) est muni de cavité en hélice (20) formées dans sa surface extérieure entre les épaulements, de manière à recevoir les spires de bobines (30, 30A) et à les isoler les unes des autres par les parties interposées du mandrin.

2. Bloc de chauffage selon la revendication 1, caractérisé en ce que la bobine est cönstituée de groupes (30, 30A) de spires, ces groupes étant espacés les uns des autres dans le sens de la longueur du mandrin (10).

3. Bloc de chauffage selon l'une quelconque des revendications 1 et 2, caractérisé en ce que la bobine de fil de chauffage est réalisée dans un alliage de platine et de rhodium.

FIG. 1

FIG. 2

FIG. 3

EP 0 152 734 B1